# EUROPÄISCHE PATENTANMELDUNG

(11) **EP 2 136 023 A2**
(43) Veröffentlichungstag der Anmeldung: **23.12.2009**
(21) Anmeldenummer: 09162707.5
(22) Anmeldetag: 15.06.2009
(51) Int. Cl.: E05F 15/14

(54) **Befestigungsanordnung für ein Zugelementende**

(30) Priorität: 18.06.2008 DE 102008028660
(71) Anmelder: GEZE GmbH, 71229 Leonberg (DE)
(72) Erfinder: Bauer, Ludwig, 75248 Ölbronn-Dürrn (DE)

(57) **Zusammenfassung**

Es wird eine Befestigungsanordnung für ein Zugelementende beschrieben, mit einem Grundkörper, einer in den Grundkörper eingebrachten Führung für das Zugelement und mindestens einem Befestigungsmittel, über welches das Zugelementende am Grundkörper festgelegt ist, wobei das mindestens eine Befestigungsmittel als federbelastetes Klemmelement zur Schnellbefestigung des Zugelementendes ausgeführt ist.

## Beschreibung

Die Erfindung betrifft eine Befestigungsanordnung für ein Zugelementende nach dem Oberbegriff des Anspruchs 1.

Eine derartige Befestigungsanordnung für ein Ende eines Zugelements, welches in einer Teleskopschiebetüranlage eingesetzt wird, ist aus der Offenlegungsschrift DE 199 52 264 A1 bereits bekannt. Die dort beschriebene, automatische Teleskopschiebetüranlage umfasst einen elektrischen Antriebsmotor und mindestens ein Teleskopschiebeflügelpaar, bestehend aus mindestens zwei voneinander abhängig bewegten, in gleicher Richtung angetriebenen Flügeln, welche durch eine Mitnehmereinrichtung getriebemäßig miteinander verbunden sind. Jeweils einer der Flügel des Teleskopschiebeflügelpaars wird über einen umlaufenden, über Umlenkrollen geführten Treibriemen angetrieben. Die Kraftübertragung zwischen den beiden Flügeln erfolgt über ein geschlossenes, flexibles und zugsteifes Zugelement, welches beispielsweise als Seil, Riemen, Band oder dergleichen ausgebildet ist, dessen Enden an einem oder mehreren ortsfesten Punkten abgestützt bzw. befestigt sind. Nähere Angaben zur Ausführung der Befestigungsanordnung für ein Zugelementende werden in diesem Dokument jedoch nicht gemacht. An einem der beiden Flügel sind zwei Umlenkrollen drehbar gelagert, die das Zugelement, mit welchem der andere Flügel über ein Schleppmittel verbunden ist, in Form einer geschlossenen Schlaufe führen.

Zudem sind aus dem Stand der Technik z.B. Seilschlösser mit Madenschrauben, Seil- oder Bügelklemmen sowie Spannschlösser bekannt, welche in der Regel einen Grundkörper, eine in den Grundkörper eingebrachte Führung und mindestens ein Befestigungsmittel umfassen, mit dem sich das Seilende am Grundkörper befestigen lässt.

Der Erfindung liegt die Aufgabe zugrunde, eine Befestigungsanordnung für ein Zugelementende anzugeben, welche eine rationelle und werkzeuglose Schnellbefestigung ermöglicht.

Die Aufgabe wird durch die Merkmale des Anspruchs 1 gelöst.

Die Unteransprüche bilden vorteilhafte Ausgestaltungsmöglichkeiten der Erfindung.

Die erfindungsgemäße Befestigungsanordnung kann ein als federbelastetes Klemmelement ausgeführtes Befestigungsmittel umfassen, welches in vorteilhafter Weise eine werkzeuglose Schnellbefestigung des Zugelementendes an einem Grundkörper ermöglicht. Dadurch wird ein einfaches Spannen und vibrationsfestes Fixieren des Zugelements ermöglicht, welches beispielsweise als Seil, Riemen, Band oder dergleichen ausgeführt ist und eine Antriebs- oder Mitnehmerfunktion ausführt. Der Grundkörper kann beispielsweise als Aluminium-Frästeil, Kunststoffspritzgussteil oder Zinkdruckgussteil ausgeführt werden, und mindestens eine Bohrung als Zugelementführung aufweisen, durch die das zu spannende Zugelement geführt ist.

Um die Schnellbefestigung des Zugelementendes durch das federbelastete Klemmelement zu sichern, kann ein zweites Klemmelement zur Sicherung des Zugelementendes eingesetzt werden, welches beispielsweise als Gewindestift bzw. Schraube ausgeführt ist und nach der Schnellbefestigung des Zugelementendes in eine korrespondierende, in den Grundkörper eingebrachte Gewindebohrung eingeschraubt wird, um das Zugelementende zwischen dem federbelasteten Klemmelement und dem freien Verlauf des Zugelements im Bereich der Zugelementführung zu fixieren.

Das federbelastete Klemmelement ist so konfiguriert, dass eine der Zugrichtung des Zugelements entgegengesetzte Einführbewegung des Zugelementendes innerhalb der Führung freigegeben ist, und eine Bewegung des Zugelementendes in Zugrichtung des Zugelements gesperrt ist. In einer bevorzugten Ausgestaltung ist das federbelastete Klemmelement beispielsweise als am Grundkörper befestigte Blattfeder ausgeführt, deren Klemmschenkel in einem spitzen Winkel auf das Zugelement drückt. Diese Auflage der Blattfeder in einem spitzen Winkel ermöglicht ein einfaches Einfädeln und Spannen des Zugelements, da der Klemmschenkel der Blattfeder von dem Zugelementende angehoben wird. In Zugrichtung verhakt sich jedoch der kantige Klemmschenkel der Blattfeder mit dem Zugelement oder dessen Ummantelung und verhindert dadurch ein Zurückziehen des Zugelementendes.

Zur Befestigung ist das Klemmelement mit einem Halteschenkel in einem Aufnahmebereich des Grundkörpers zwischen einem Auflager und einem Stützsteg eingespannt und gegen Verschieben gesichert. Eine Anordnung des zweiten, als Gewindestift bzw. Klemmschraube ausgebildeten Klemmelements ist auf technisch einfache Weise dadurch möglich, dass die Bohrung zur Aufnahme des zweiten Klemmelements so angeordnet ist, dass dieses beim Einführen in die Aufnahmebohrung den Halteschenkel des ersten Klemmelements, welcher eine korrespondierende Bohrung aufweist, senkrecht durchdringt und somit zusätzlich zur Sicherung des Zugelementendes das Klemmelement gegen Verschieben sichert.

Um konstruktiv eine beständige Spannung des Zugelements aufrecht zu erhalten und um Längenänderungen auszugleichen, welche aufgrund von Schrägzug oder Temperaturänderungen auftreten können, kann das andere Zugelementende in einer in den Grundkörper eingebrachten weiteren Zugelementführung geführt und über ein als Längenausgleichselement wirkendes Federelement längsbeweglich am Grundkörper abgestützt sein.

In weiterer Ausgestaltung der Befestigungsanordnung kann das Zugelement eine Antriebs- oder Mitnehmerfunktion ausführen, wobei der Grundkörper als Spannschloss für das Zugelement wirkt und höhenverstellbar an einem Trägermodul befestigt ist. Zur Höhenverstellung sind das Trägermodul und der Grundkörper als Führungsanordnung ausgebildet, beispielsweise als Prismenführung, die auch als Schwalbenschwanzführung bezeichnet wird, wobei das Trägermodul als Führungsschiene mit Führungsflächen und der Grundkörper als Führungsschlitten mit korrespondierenden Gegenführungsflächen ausgebildet ist. Der als Führungsschlitten ausgeführte Grundkörper ist in Bezug auf das als Führungsschiene ausgeführte Trägermodul verschiebbar und in der eingestellten Verschiebeposition fixierbar.

Im Nachfolgenden werden Ausführungsbeispiele in der Zeichnung anhand der Figuren näher erläutert.

Dabei zeigen:
- **Fig. 1**: eine perspektivische Ansicht auf einen oberen Bereich einer Teleskopschiebetür;
- **Fig. 2**: die perspektivische Ansicht gemäß Fig. 1 ohne Darstellung der Laufrohre;
- **Fig. 3**: eine perspektivische Ansicht auf eine Ausführungsform einer erfindungsgemäßen Befestigungsanordnung für ein Zugelementende;
- **Fig. 4**: eine weitere perspektivische Ansicht auf die Ausführungsform der erfindungsgemäßen Befestigungsanordnung gemäß Fig. 3;
- **Fig. 5**: eine Seitenansicht der Ausführungsform der erfindungsgemäßen Befestigungsanordnung gemäß Fig. 3 und Fig. 4;
- **Fig. 6**: eine perspektivische Ansicht auf eine weitere Ausführungsform einer erfindungsgemäßen Befestigungsanordnung für ein Zugelementende;
- **Fig. 7**: eine Seitenansicht der Ausführungsform der erfindungsgemäßen Befestigungsanordnung gemäß Fig. 6.

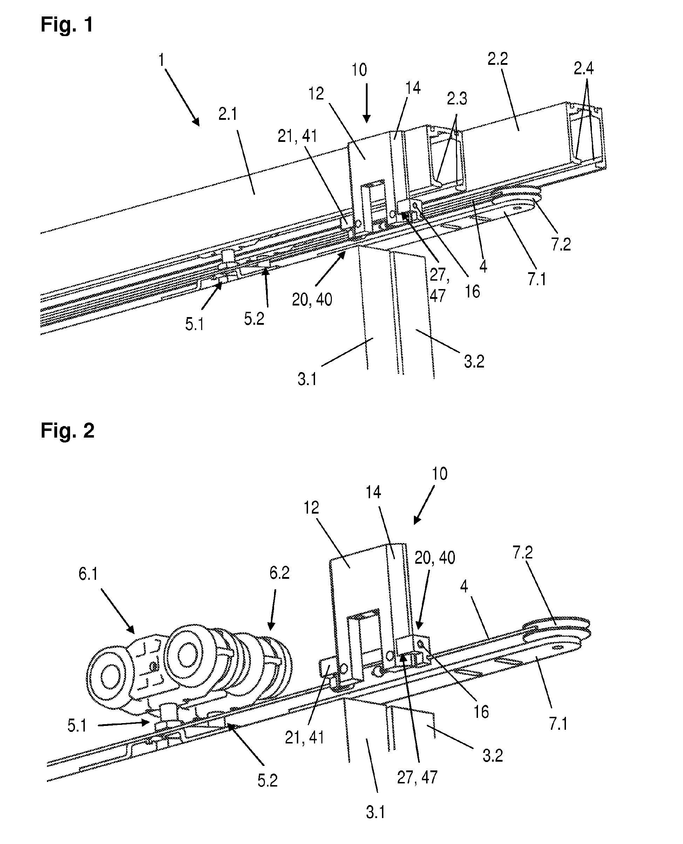

In den Figuren 1 und 2 ist ein oberer Bereich einer Teleskopschiebetüranlage 1 dargestellt, welche zwei parallel angeordnete Profilschienen 2.1, 2.2 umfasst, in welchen zwei gleichsinnig angetriebene Türflügel 3.1, 3.2 geführt sind. Die beiden Profilschienen 2.1, 2.2 sind im dargestellten Ausführungsbeispiel jeweils C-förmig ausgebildet und weisen im Inneren an den zueinander gewandten Schenkeln zwei ausgeformte Laufbahnen 2.3, 2.4 auf. Zwischen den Laufbahnen 2.3, 2.4 erstreckt sich nach unten jeweils eine Nut, welche Aufhängevorrichtungen 5.1, 5.2 von korrespondierenden Rollwagen 6.1, 6.2 jeweils durchgreifen. Die Rollwagen 6.1, 6.2 sind innerhalb der Profilschienen 2.1, 2.2 linear geführt und weisen jeweils Paare von nebeneinander liegenden Laufrollen auf, wobei die Formen der Laufflächen der Laufrollen an die Formen der Laufbahnen 2.3, 2.4 angepasst sind, und wobei die Laufrollen auf den Laufbahnen 2.3, 2.4 der Profilschienen 2.1, 2.2 abrollen. An einem ersten Rollwagen 6.1 ist ein erster verschiebbarer Türflügel 3.1 über eine erste Aufhängevorrichtung 5.1 aufgehängt, und an einem zweiten Rollwagen 6.2 ist ein zweiter Türflügel 3.2 über eine zweite Aufhängevorrichtung 5.2 aufgehängt, wobei pro Türflügel 3.1, 3.2 vorzugsweise jeweils mindestens zwei hintereinander, insbesondere an den Türflügelenden angeordnete Rollwagen 6.1, 6.2 vorgesehen sind. Die Türflügel sind somit parallel zueinander verschiebbar gelagert. Die Kraftübertragung zwischen den beiden verschiebbaren Türflügeln 3.1, 3.2 erfolgt über ein geschlossenes, flexibles und zugsteifes Zugelement 4, welches beispielsweise als Seil, Riemen, Band oder dergleichen ausgebildet ist, und dessen Enden an einem oder mehreren ortsfesten Punkten, beispielsweise an einem Trägermodul 10 abgestützt sind. Am ersten Türflügel 3.1 sind zwei Umlenkrollen an korrespondierenden Befestigungsschienen drehbar gelagert angeordnet, wobei in Fig. 1 und 2 nur eine Befestigungsschiene 7.1 mit einer Umlenkrolle 7.2 gezeigt ist.

Im dargestellten Ausführungsbeispiel der Teleskopschiebetürenanlage 1 führt das als Zugseil ausgebildetes Zugelement 4 eine Antriebs- und/oder Mitnehmerfunktion aus, wobei ein Grundkörper 21 einer Befestigungsanordnung ein Spannschloss 20 für die Enden des Zugseils bildet und höhenverstellbar am Trägermodul 10 befestigt ist. Ein Zugseil als Zugelement 4 zeichnet sich durch einen besonders geringen Bauraumbedarf bei hoher Zugfestigkeit aus. Das Trägermodul 10 und der Grundkörper 21 sind als Führungsanordnung zur senkrechten Höhenverstellung konfiguriert, wobei das Trägermodul 10 als Führungsschiene 12 mit Führungsflächen 14 und der Grundkörper 21 als Führungsschlitten mit korrespondierenden Gegenführungsflächen 27 ausgebildet ist. Der als Führungsschlitten ausgeführte Grundkörper 21 ist in Bezug auf das als Führungsschiene 12 ausgeführte Trägermodul 10 verschiebbar und kann beispielsweise über mindestens eine Feststellschraube 16 in der eingestellten Verschiebeposition fixiert werden.

Diese Teleskopschiebetürenanlage 1 entspricht, abgesehen von der dargestellten Befestigungsanordnung 20 und dem Trägermodul 10, der in der Offenlegungsschrift DE 199 52 264 A1 beschriebenen Bauweise, so dass an dieser Stelle auf weitergehende Erläuterungen zur Gesamtanordnung verzichtet wird.

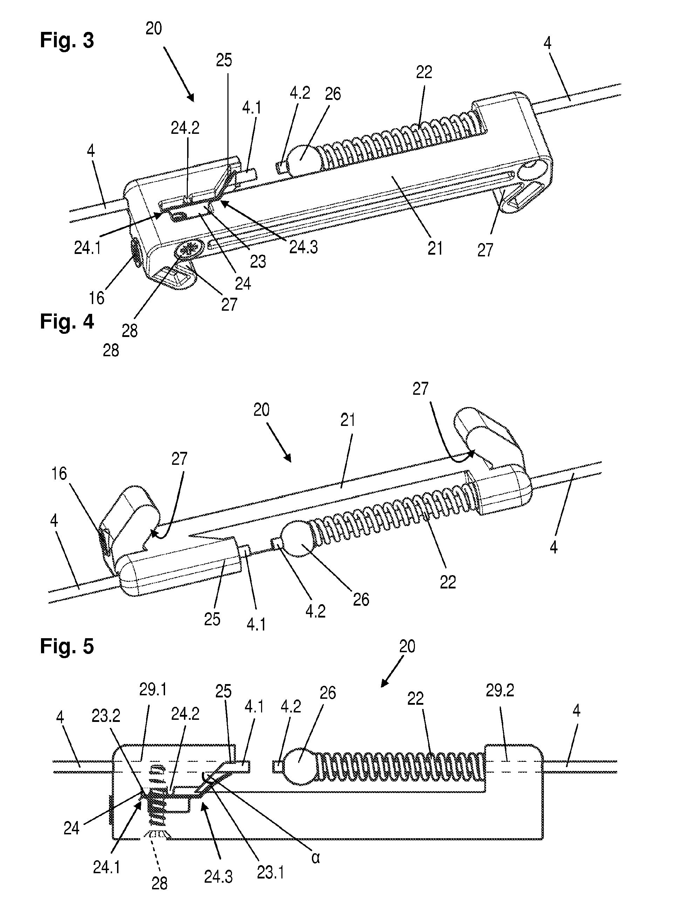

Nachfolgend wird unter Bezugnahme auf die Figuren 3 bis 5 ein erstes Ausführungsbeispiel der erfindungsgemäßen Befestigungsanordnung mit einem Spannschloss 20 für Zugelementenden 4.1, 4.2 des als Zugseil ausgeführten Zugelements 4 beschrieben. Wie es in den Figuren 3 bis 5 gezeigt ist, umfasst das Spannschloss 20 den Grundkörper 21, der hier als Druckgussteil ausgeführt ist, zwei in den Grundkörper 21 eingebrachte Führungen 29.1 und 29.2, welche hier als Bohrungen ausgeführt sind, und ein erstes Klemmelement 23 als Befestigungsmittel, über welches ein erstes Zugelementende 4.1 am Grundkörper 21 befestigt ist.

Im dargestellten Ausführungsbeispiel ist das federnde Klemmelement 23 als Blattfeder zur Schnellbefestigung des ersten Seilendes 4.1 ausgeführt. Das erste Zugelementende 4.1 des zu spannenden Zugelements 4 wird durch die als Bohrung ausgebildete erste Führung 29.1 geführt. Ein abgewinkelter Klemmschenkel 23.1 des Klemmelements 23 drückt außerhalb der ersten Führung 29.1 in Zugrichtung in einem spitzen Winkel α auf das Zugelement 4, welches auf einem Gegenlager 25 für den Klemmschenkel 23.1 aufliegt. Dieser zwischen Zugelement 4 und Klemmschenkel 23.1 spitze Winkel α ermöglicht ein einfaches Einfädeln und Spannen des Zugelements 4, da der Klemmschenkel 23.1 des Klemmelements 23 beim Einführen des ersten Zugelementendes 4.1 von diesem durch Verdrängung angehoben wird. Nach dem Einschieben verhakt sich jedoch der scharfkantige Klemmschenkel 23.1 mit dem Zugelement 4 gegen die Zugrichtung und verhindert dadurch das Zurückziehen desselben. Das Klemmelement 23 ist zur Befestigung am Grundkörper 21 mit einem Halteschenkel 23.2 in einem Aufnahmebereich 24, der im Wesentlichen vom Grundkörper 23 umschlossen ist, zwischen einem Auflager 24.1 und einem Stützsteg 24.2 eingespannt, wobei der abgewinkelte Klemmschenkel 23.2 mit seinem Winkelbereich an einem Anlagebereich 24.3 des Grundkörpers anliegt, um ein Spannen des Klemmschenkels 23.2 zur Erzeugung des Auflagedrucks auf das erste Zugelementende 4.1 zu unterstützen.

Wie es aus den Figuren 3 bis 5 weiter hervorgeht, ist zur Sicherung der Schnellbefestigung des ersten Zugelementendes 4.1 ein zweites Klemmelement vorhanden. Das zweite Klemmelement ist hier beispielhaft als Klemmschraube 28 ausgeführt, welche in eine korrespondierende Gewindebohrung im Grundkörper 21 eingeschraubt ist und das Zugelementende 4.1 innerhalb der Führung 29.1 durch radiales Zusammendrücken zusätzlich fixiert. Zudem durchdringt die Klemmschraube 28 den Halteschenkel 23.2 des Klemmelements 23 und sichert dieses gegen Verschieben.

Bei den dargestellten Ausführungen der Befestigungsanordnung als Spannschloss 20 ist das zweite Zugelementende 4.2 des Zugelements 4 in einer zweiten Führung 29.2 im Grundkörper 21 geführt und über ein als Längenausgleichselement wirkendes Federelement 22 längsbeweglich am Grundkörper 21 abgestützt. Als Anlage für das im dargestellten Ausführungsbeispiel als Schraubendruckfeder ausgeführte Federelement 22, ist auf das zweite Zugelementende 4.2 eine Kugel 26 aufgepresst. Das Federelement 22 sorgt für eine beständige Spannung des Zugelements 4 und gleicht zudem aufgrund von Schrägzug bzw. Temperaturschwankungen verursachte Längenänderungen des Zugelements 4 zuverlässig aus.

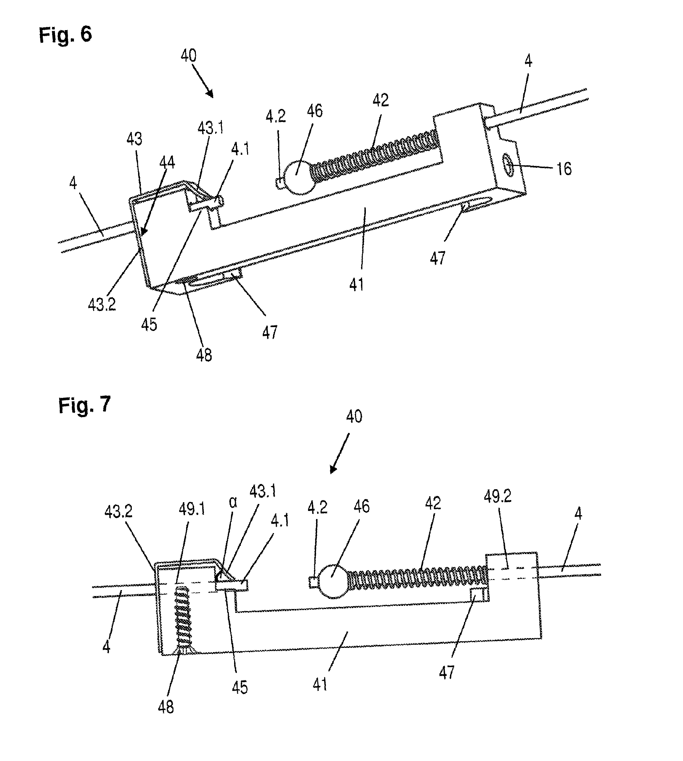

Nachfolgend wird unter Bezugnahme auf die Figuren 6 und 7 ein zweites Ausführungsbeispiel der erfindungsgemäßen Befestigungsanordnung am Spannschloss 40 für die Zugelementenden 4.1, 4.2 eines ebenfalls als Zugseil ausgeführten Zugelements 4 beschrieben. Bei dieser Ausführungsform umfasst das Spannschloss 40, analog zum ersten Ausführungsbeispiel gemäß den Figuren 3 bis 5, den Grundkörper 41, der hier als Frästeil ausgeführt ist, zwei in den Grundkörper 41 als Bohrungen eingebrachte Führungen 49.1 und 49.2 und ein erstes Befestigungsmittel, über welches das erste Zugelementende 4.1 am Grundkörper 41 befestigt ist. Analog zum ersten Ausführungsbeispiel wird das erste Befestigungsmittel ebenfalls von einem als Blattfeder ausgebildeten Klemmelement 43 gebildet, wobei sich die Befestigung des Klemmelements 43 von der im ersten Ausführungsbeispiel unterscheidet, indem ein Halteschenkel 43.2 des Klemmelements 43 an einer als Anlagefläche 44 ausgeführten Außenkontur des Grundkörpers 41 unter flächiger Auflage mit diesem fest verbunden ist, beispielsweise durch Schrauben oder Kleben. Das erste Zugelementende 4.1 des zu spannenden Zugelements 4 wird analog zum ersten Ausführungsbeispiel durch die erste Führung 49.1 geführt. Ein abgewinkelt ausgeführter Klemmschenkel 43.1 des Klemmelements 43 drückt außerhalb der ersten Führung 49.1 in einem spitzen Winkel α auf das Zugelement 4, welches auf einem Gegenlager 45 für den Klemmschenkel 43.1 aufliegt. Dieser gegenüber dem Zugelement 4 spitze Winkel α ermöglicht ein einfaches Einfädeln und Spannen des Zugelements 4, da der Klemmschenkel 43.1 des Zugelements 43 beim Einführen des ersten Zugelementendes 4.1 von diesem angehoben wird. Gegen die Zugrichtung verhakt sich jedoch der scharfkantige Klemmschenkel 43.1 mit dem Zugelement 4 und verhindert dadurch, dass das Zugelement 4 unter Zugbelastung zurückgezogen wird.

Entsprechend dem ersten Ausführungsbeispiel ist auch hier ein zweites als Klemmschraube 48 ausgebildetes Klemmelement zur Sicherung der Schnellbefestigung des ersten Zugelementendes 4.1 zur zusätzlichen Fixierung des Zugelementendes 4.1 innerhalb der Führung 49.1 vorhanden. Das zweite Zugelementende 4.2 des Zugelements 4 ist, wie im ersten Ausführungsbeispiel, in einer als Bohrung in den Grundkörper 41 eingebrachten zweiten Führung 49.2 geführt und über ein als Längenausgleichselement wirkendes, als Schraubendruckfeder ausgebildetes Federelement 42 längsbeweglich am Grundkörper 41 abgestützt. Als Anlage für das Federelement 42 ist auf das zweite Zugelementende 4.2 ebenfalls eine Kugel 46 aufgepresst.

Die erfindungsgemäße Befestigungsanordnung mittels eines Spannschlosses 20, 40 ermöglicht in vorteilhafter Weise ein einfaches Spannen und vibrationsfestes Fixieren der beiden Enden eines als Zugelement 4 ausgebildeten Übertragungsmittels, insbesondere eines Zugseils aus Draht, das beispielsweise bei einer Teleskopschiebetürenanlage 1 zum Antrieb oder zur Mitnehme der Türflügel verwendet wird.

### Liste der Referenzzeichen

- 1: Teleskopschiebetüranlage
- 2.1,2.2: Profilschiene
- 2.3,2.4: Laufbahn
- 3.1,3.2: Türflügel
- 4: Zugelement
- 4.1, 4.2: Zugelementende
- 5.1,5.2: Türflügelaufhängung
- 6.1, 6.2: Rollenwagen
- 7.1: Befestigungsschiene
- 7.2: Umlenkrolle
- 10: Trägermodul
- 12: Führungsschiene
- 14: Führungsfläche
- 16: Arretierungsschraube
- 20: Spannschloss
- 21: Grundkörper
- 22: Federelement
- 23: Klemmelement
- 23.1: Klemmschenkel
- 23.2: Halteschenkel
- 24: Aufnahmebereich
- 24.1: Auflager
- 24.2: Stützsteg
- 24.3: Anlagebereich
- 25: Gegenlager
- 26: Abschlusskugel
- 27: Gegenführungsfläche
- 28: Klemmschraube
- 29.1, 29.2: Führung
- 40: Spannschloss
- 41: Grundkörper
- 42: Federelement
- 43: Klemmelement
- 43.1: Klemmschenkel
- 43.2: Halteschenkel
- 44: Anlagefläche
- 45: Gegenlager
- 46: Abschlusskugel
- 47: Gegenführungsfläche
- 48: Klemmschraube
- 49.1,49.2: Führung
- α: Winkel

## Patentansprüche

1. Befestigungsanordnung für ein Zugelementende (4.1), mit einem Grundkörper (21, 41), einer in den Grundkörper (21, 41) eingebrachten Führung (29.1) für das Zugelement (4) und mindestens einem Befestigungsmittel, über welches das Zugelementende (4.1) am Grundkörper (21, 41) festgelegt ist, wobei das mindestens eine Befestigungsmittel als federbelastetes Klemmelement (23, 43) zur Schnellbefestigung des Zugelementendes (4.1) ausgeführt ist.

2. Befestigungsanordnung nach Anspruch 1,
**dadurch gekennzeichnet, dass** ein zweites Klemmelement, das als Klemmschraube (28) ausgebildet ist, zur Sicherung der Schnellbefestigung des Zugelementendes (4.1) vorhanden ist.

3. Befestigungsanordnung nach Anspruch 1 oder 2,
**dadurch gekennzeichnet, dass** das federbelastete Klemmelement (23, 43) so konfiguriert ist, dass eine der Zugrichtung des Zugelements (4) entgegengesetzte Einführbewegung des Zugelementendes (4.1) innerhalb der Führung (29.1, 49.1) freigegeben ist, und dass eine Bewegung des Zugelementendes (4.1) in Zugbelastungsrichtung des Zugelements (4) gesperrt ist.

4. Befestigungsanordnung nach einem der Ansprüche 1 bis 3,
**dadurch gekennzeichnet, dass** das federbelastete Klemmelement (23, 43) als am Grundkörper (21, 41) befestigte Blattfeder ausgeführt ist, deren Klemmschenkel (23.1, 43.1) in Zugrichtung unter einem spitzen Winkel (α) auf das Zugelement (4) drückt.

5. Befestigungsanordnung nach Anspruch 3,
**dadurch gekennzeichnet, dass** der Klemmschenkel (23.1, 43.1) des Klemmelements (23, 43) beim Einführen des Zugelementendes (4.1) angehoben wird.

6. Befestigungsanordnung nach Anspruch 3 oder 4,
**dadurch gekennzeichnet, dass** das Klemmelement (23) mit einem Halteschenkel (23.2) in einem Aufnahmebereich (24) des Grundkörpers (21) zwischen einem Auflager (24.1) und einem Stützsteg (24.2) eingespannt ist, und gegen Verschieben gesichert ist.

7. Befestigungsanordnung nach Anspruch 6,
**dadurch gekennzeichnet, dass** das als Klemmschraube (28) ausgebildete zweite Klemmelement den Halteschenkel (23.2) des Klemmelements (23) durchdringt und gegen Verschieben sichert.

8. Befestigungsanordnung nach einem der Ansprüche 1 bis 7,
**dadurch gekennzeichnet, dass** das andere Zugelementende (4.2) in einer in den Grundkörper (21, 41) eingebrachten weiteren Führung (29.2, 49.2,) geführt und über ein als Längenausgleichselement wirkendes Federelement (22, 42) längsbeweglich am Grundkörper (21, 41) abgestützt ist.

9. Befestigungsanordnung nach einem der Ansprüche 1 bis 8,
**dadurch gekennzeichnet, dass** das Zugelement (4) als Seil oder Riemen oder Band oder dergleichen ausgeführt ist und eine Antriebs-und/oder Mitnehmerfunktion ausführt, wobei der Grundkörper (21, 41) als Spannschloss für das Zugselement (4) ausgebildet ist und höhenverstellbar an einem Trägermodul (10) befestigt ist.

10. Befestigungsanordnung nach Anspruch 9,
**dadurch gekennzeichnet, dass** das Trägermodul (10) und der Grundkörper (21, 41) als Führungsanordnung zur Höhenverstellung ausgebildet sind, wobei das Trägermodul (10) als Führungsschiene (12) mit Führungsflächen (14) ausgeführt ist, wobei der Grundkörper (21, 41) als Führungsschlitten mit korrespondierenden Gegenführungsflächen (27, 47) ausgeführt ist, und wobei der als Führungsschlitten ausgeführte Grundkörper (21, 41) in Bezug auf das als Führungsschiene (12) ausgeführte Trägermodul (10) verschiebbar ist und in der eingestellten Verschiebeposition fixierbar ist.
